Europäisches Patentamt

European Patent Office

Office européen des brevets

(11) Publication number: **0 223 589 B1**

# EUROPEAN PATENT SPECIFICATION

(45) Date of publication of patent specification: **24.07.91**    (51) Int. Cl.⁵: **B65G 53/12, B65G 53/40**

(21) Application number: **86308983.5**

(22) Date of filing: **18.11.86**

(54) Pneumatic conveying apparatus for bulk material.

(30) Priority: **20.11.85 GB 8528508**

(43) Date of publication of application:
**27.05.87 Bulletin 87/22**

(45) Publication of the grant of the patent:
**24.07.91 Bulletin 91/30**

(84) Designated Contracting States:
**DE FR SE**

(56) References cited:
**DD-A- 203 514**
**DE-A- 2 806 276**
**DE-A- 3 134 180**
**DE-B- 1 139 434**

(73) Proprietor: **SIMON-MACAWBER LIMITED**
**Shaw Lane Industrial Estate**
**Doncaster South Yorkshire DN2 4SE(GB)**

(72) Inventor: **Snowdon, Brian**
**14 Airedale Avenue Tickhill**
**Doncaster South Yorkshire(GB)**

(74) Representative: **Ajello, Michael John**
**38a Bramhall Lane South**
**Bramhall Stockport Cheshire SK7 1AH(GB)**

## Description

THIS INVENTION relates to a device for the continuous introduction of bulk material into a pneumatic conveying conduit.

The invention is intended for use in areas where there is a height limitation between the outlet of the bulk storage and ground level. Present continuous feed devices which can operate with low height are ejectors, rotary feed valves or rotary screw pumps. They have the disadvantages of, a) limitation on operating pressures, b) high wear rates of the moving parts, and, c) high power consumption for the moving parts.

Blow tanks, which are a conventional method of pneumatic transport could also be used, but because of the low height limitations the blow tanks would be quite small and because of their cyclic manner would not provide the conveying rates afforded by the constant feed devices previously described.

There are known methods of using two blow tanks situated side-by-side and working on alternative cycles to provide a continuous material input into the conveying conduit, however, this does not resolve the height problem since the inlets for both vessels are by necessity positioned some distance apart and chutes from one outlet on the feeding bunker to both inlets would require considerable height to achieve flow by gravity.

Known principles of regulating the material flow continuously into the conveying conduit are rotary valve feeders, screw feeders, and gravity flow devices with pressure feed back signals to regulate material flow in accordance with conveying conduit pressure.

The above known methods are capable of feeding materials into the conveying conduit continuously using pressure vessels as material pressure locks by locating one vessel on top of the other vessel with valves between each vessel and a valve on the inlet of the top vessel to allow material to gravity flow first into the top vessel and then by gravity into the bottom vessel which contains the material feeding device. This bottom vessel is kept under constant pressure, similar to that of the conveying conduit, and the top material and air inlet valves operated in a manner which prevents pressure escape but allows material to gravitate into the feeding vessel. However, the major problem with this arrangement is that it is a relatively tall assembly and can therefore not be used in a system where there is a height limitation.

One known device for introduction of bulk material into a pneumatic conveying conduit is described in patent specification DE-C-1139434 which describes a first vessel for material having a top material inlet valve and a material outlet, a second vessel for the material having a discharge outlet to the conveying conduit, a supply means for compressed gas to said conveying conduit, and a conduit for the transfer of material between the first and second vessels the first vessel being situated adjacent the second vessel and connected to a bulk storage means which has its outlet to the first vessel at a level below the level of the top of the second vessel.

The present invention is based on the provision of two vessels adjacent to one another, one acting as a "lock vessel", the other as a "feeding vessel". The "lock vessel" is smaller than the "feeding vessel", and is used on a cyclic basis to replenish material which is continuously discharged from the feeding vessel. Since the lock vessel has only to convey material the short distance between the two vessels, it can cycle frequently and hence be of a relatively small volume in relation to the amount of material being conveyed through the system. The actual discharge rate from the feeding vessel is controlled by the conveying conduit pressure. The objective is to maintain a constant set line pressure by the regulation of material flow into the conveying conduit.

According to the invention, there is provided a device for the introduction of bulk material into a pneumatic conveying conduit, comprising a first vessel for the material, having a top material inlet valve and a material outlet, a second vessel for the material having a discharge outlet to the conveying conduit, a supply means for compressed gas to said conveying conduit, and a conduit for the transfer of material between the first and second vessels, the first vessel being situated adjacent the second vessel and connected to a bulk storage means which has its outlet to the first vessel at a level below the level of the top of the second vessel; characterised in that said transfer conduit extends from the interior base region of the first vessel to the top region of the second vessel; in that said transfer conduit is comprised by a valved conduit; in that said second vessel has a gravity discharge outlet to the conveying conduit; in that means are provided to regulate the flow of material into the conveying conduit in response to the pressure therein; in that there are provided means for connecting the compressed gas supply to the first vessel to pressurise same; and in that said compressed gas supply to said conveying conduit includes a restriction which maintains a pressure differential between the first and second vessels thus to transfer material pneumatically from the first vessel via said valved transfer conduit to the second vessel to refill same when required to ensure the presence of sufficient material in the second vessel to provide a continuous flow of material into the conveying conduit.

Thus the device may be used in a system where there is a height limitation. The means to regulate the flow of material into the conduit may typically be a rotary valve feeder, a screw feeder or a gravity flow device with a pressure feed back system.

Preferably the means for regulating material flow into the oonveying conduit is connected to pressure sensing means and to control means to adjust the material flow dependent upon the pressure in the conduit.

An example of the device in accordance with the invention will now be described, by way of example only, with reference to the accompanying schematic drawing.

A bulk feeding hopper 1 is situated with its outlet over the top inlet of a first vessel 2 which is at low level above the ground 4. Air from a blower 16 picks up material falling from a second vessel 3 by gravity through a valve 11 which is regulated by a control system 12 including pressure sensing means to allow the correct amount of material into a conveying conduit 14 dependent upon a constant pre-determined pressure in the part of the conduit indicated by reference P.

Vessel 3 holds material, and the pressure in the top of the vessel is kept the same as at P by a balance line 10. When material in vessel 3 is above a level sensor 9, two valves 18 and 15 are held closed. When the level of material falls below sensor 9, two valves 6 and 7 are opened allowing vessel 2 to fill to its level sensor 8. Then valves 6 and 7 close and valve 15 is opened to admit pressurised air into the base of vessel 2 until the pressure is equal to that in vessel 3 before valve 18 is opened. The pressure differential caused by a restriction 13 in conduit 14 causes material to be pneumatically conveyed from vessel 2 through conduit 17 into vessel 3. When transfer of material is complete valves 18 and 15 are closed. During transfer from vessel 2 to vessel 3 the air used for conveying vents through balance pipe 10. Membrane 5 in the base of vessel 2 is a fluidising membrane or similar device to aerate the product before conveying it to vessel 3. The cycle is repeated when the material level falls below level sensor 9.

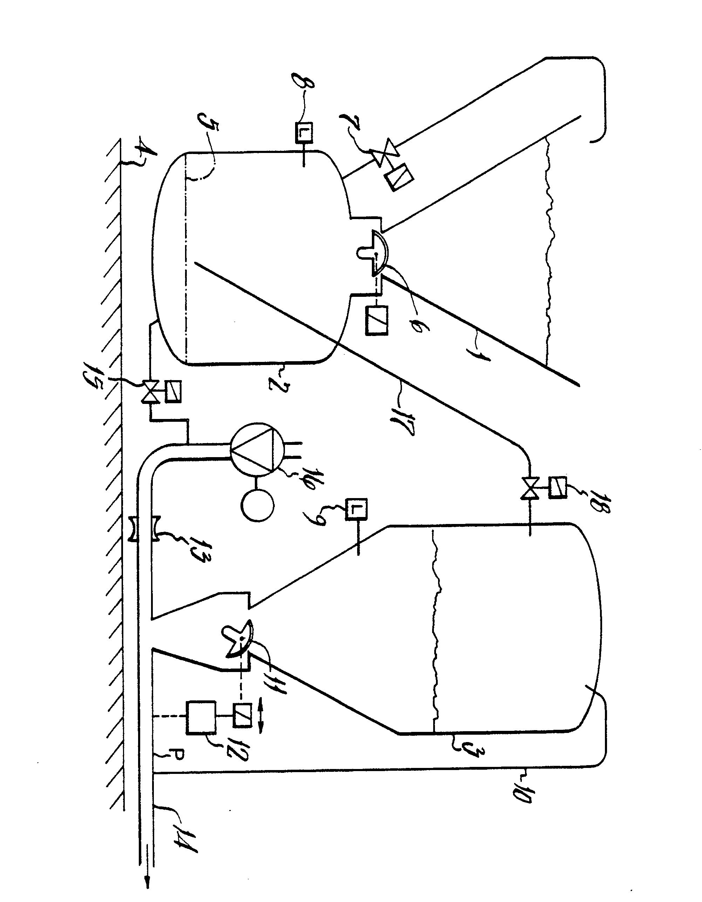

## Claims

1. A device for the introduction of bulk material into a pneumatic conveying conduit, comprising a first vessel (2) for the material, having a top material inlet valve (6) and a material outlet, a second vessel (3) for the material having a discharge outlet (11) to the conveying conduit (14), a supply means (16) for compressed gas to said conveying conduit (14), and a conduit (17) for the transfer of material between the first and second vessels (2, 3), the first vessel (2) being situated adjacent the second vessel (3) and connected to a bulk storage means (1) which has its outlet to the first vessel (2) at a level below the level of the top of the second vessel (3); characterised in that said transfer conduit (17) extends from the interior base region of the first vessel (2) to the top region of the second vessel (3); in that said transfer conduit (17) is comprised by a valved conduit (18); in that said second vessel (3) has a gravity discharge outlet (11) to the conveying conduit (14); in that means (12) are provided to regulate the flow of material into the conveying conduit (14) in response to the pressure therein; in that there are provided means (15) for connecting the compressed gas supply to the first vessel (2) to pressurise same; and in that said compressed gas supply (16) to said conveying conduit (14) includes a restriction (13) which maintains a pressure differential between the first and second vessels (2, 3) thus to transfer material pneumatically from the first vessel (2) via said valved transfer conduit (17) to the second vessel (3) to refill same when required to ensure the presence of sufficient material in the second vessel (3) to provide a continuous flow of material into the conveying conduit (14).

2. A device according to Claim 1, wherein the means to regulate the flow of material into the conveying conduit is a gravity flow device (11) with a feed-back control system (12).

3. A device according to Claim 1 or Claim 2, in which the means (11, 12) for regulating material flow into the conveying conduit includes control means (12) further including pressure sensing means thus to adjust the material flow dependent upon a predetermined pressure in the conveying conduit.

4. A device according to any preceding claim, including means (5) in the base region of said first vessel (2) to fluidise the material therein and wherein said supply means (16) for compressed gas is connected to said conveying conduit (14).

5. A device according to any preceding claim, including a balance line (10) between the conveying conduit and said second vessel (3) to ensure equalised pressures therein.

6. A device according to any preceding claim, including a plurality of control valves (6, 7, 15, 18) to cause material to be conveyed from said first to said second vessel when the level of material in the latter falls below a predetermined level.

7. A device according to any preceding claim, wherein said first vessel (2) is gravity fed with material from said bulk storage means (1) via said top material inlet valve (6).

8. A device according to any preceding claim, wherein said first vessel (2) includes level sensing means (8) to cause operation of said top material inlet valve (6) when the material in said first vessel (2) falls below a predetermined level.

**Revendications**

1. Dispositif permettant l'introduction de matériaux en vrac dans un conduit convoyeur pneumatique, comprenant une première cuve (2) pour les matériaux, pourvue d'une soupape (6) supérieure d'admission des matériaux et d'une sortie des matériaux, une deuxième cuve (3) pour les matériaux, pourvue d'une sortie (11) de décharge vers le conduit convoyeur (14), un dispositif (16) d'alimentation en gaz comprimé dudit conduit convoyeur (14), et un conduit (17) permettant le transfert du matériau entre les première et deuxième cuve (2, 3), la première cuve (2) étant située de façon adjacente à la deuxième cuve (3) et reliée à une réserve (1) de matériaux en vrac, dont la sortie vers la première cuve (2) se situe à un niveau inférieur à celui du haut de la deuxième cuve (3); caractérisé par le fait que ledit conduit (17) de transfert s'étend entre la zone de fond à l'intérieur de la première cuve (2) et la partie du haut de la deuxième cuve (3): par le fait que ledit conduit (17) de transfert est pourvu d'une soupape (18); par le fait que ladite deuxième cuve (3) possède une sortie (11) de décharge par gravité vers le conduit convoyeur (14); par le fait que des moyens (12) sont prévus, qui sont destinés à réguler le débit de matériau vers le conduit convoyeur (14), en fonction d'une pression régnant dans ce conduit: par le fait que des moyens (15) sont prévus, qui permettant de relier le système d'alimentation en gaz comprimé à la première cuve (2), de façon à la mettre sous pression; et par le fait que ledit système (16) alimentant ledit conduit convoyeur (14) en gaz comprimé comporte un étranglement (13) qui maintient un différentiel de pression entre la première et la deuxième cuve (2,3), permettant ainsi de transporter pneumatiquement du matériau depuis la première cuve (2), à travers ledit conduit (17) de transfert Pourvu d'une soupape, vers la deuxième cuve (3), afin de remplir cette dernière quand cela est nécessaire, de manière à assurer la présence d'une quantité suffisante de matériaux dans la deuxième cuve (3) pour fournir un débit continu de matériaux vers le conduit convoyeur (14).

2. Dispositif selon la revendication 1, caractérisé en ce que le moyen régulateur du débit de matériau vers le conduit convoyeur est un dispositif (11) à écoulement par gravité, muni d'un système (12) de retour de pression.

3. Dispositif selon une des revendications 1 ou 2, caractérisé en ce que les moyens (11, 12) de régulation du débit de matériau vers le conduit convoyeur comprennent un dispositif (12) de régulation, qui comporte un dispositif capteur de pression, de façon à ajuster le débit de matériau en fonction d'un niveau de pression prédéterminé régnant à l'intérieur du conduit convoyeur.

4. Dispositif selon une quelconque des revendications précédentes, caractérisé en ce qu'il comporte un dispositif (5) placé dans la zone de fond de ladite première cuve (2), destiné à fluidiser le matériau contenu dans cette dernière, et en ce que ledit dispositif (1G) d'alimentation en gaz comprimé est raccordé au dit conduit convoyeur (14).

5. Dispositif selon une quelconque des revendications précédentes, caractérisé en ce qu'il comporte un conduit (10) d'équilibrage entre le conduit convoyeur et ladite deuxième cuve (3), destiné à assurer l'équilibrage des pressions régnant à l'intérieur de ceux-ci.

6. Dispositif selon une quelconque des revendications précédentes, caractérisé en ce qu'il comporte plusieurs soupapes (6, 7, 15, 18) de régulation, amenant le matériau à être transféré depuis ladite première cuve vers ladite deuxième cuve lorsque le niveau de matériau à l'intérieur de cette dernière tombe en-dessous d'un niveau prédéterminé.

7. Dispositif selon une quelconque des revendications précédentes, caractérisé en ce que ladite première cuve (2) est alimentée par gravité, en matériau provenant de ladite réserve (1) de matériau en vrac, à travers ladite soupape supérieure (6) d'admission du matériau.

8. Dispositif selon une quelconque des revendications précédentes, caractérisé en ce que ladite première cuve (2) comporte un dispositif capteur (8) de niveau, destiné à déclencher la mise en oeuvre de ladite soupape supérieure (6) d'admission de matériau lorsque le niveau de matériau dans ladite première cuve (2) tombe endessous d'un niveau prédéterminé.

## Patentansprüche

1. Vorrichtung zum Einleiten von Schüttgut in eine pneumatische Förderleitung, mit einem ersten Behälter (2) für das Schüttgut, der ein oberes Schüttguteinlaßventil (6) und einen Schüttgutauslaß hat, einem zweiten Behälter (3) für das Schüttgut, der einen Abgabeauslaß (11) zu der Förderleitung (14) hat, einer Einrichtung (16) zur Versorgung der Förderleitung (l4) mit Druckgas und einer Leitung (17) für den Transport von Schüttgut zwischen dem ersten und zweiten Behälter (2, 3), wobei der erste Behälter (2) neben dem zweiten Behälter (3) angeordnet und mit einer Schüttgutvorratseinrichtung (1) verbunden ist, die einen Auslaß zu dem ersten Behälter (2) in einer Höhe unterhalb der Höhe des oberen Endes des zweiten Behälters (3) hat; dadurch gekennzeichnet, daß sich die Transportleitung (17) von dem inneren Fußbereich des ersten Behälters (2) zu dem oberen Bereich des zweiten Behälters (3) erstreckt; daß die Transportleitung (17) eine ventilgesteuerte Leitung (18) ist; daß der zweite Behälter (3) einen Gefälleabgabeauslaß (11) zu der Förderleitung (14) hat; daß eine Einrichtung (12) vorgesehen ist zum Regeln des Stroms von Schüttgut in die Förderleitung (14) in Abhängigkeit von dem darin herrschenden Druck; daß eine Einrichtung (15) vorgesehen ist zum Verbinden der Druckgasversorgung mit dem ersten Behälter (2), um denselben unter Druck zu setzen; und daß die Druckgasversorgung (16) der Förderleitung (14) eine Drosselstelle (13) aufweist, die eine Druckdifferenz zwischen dem ersten und zweiten Behälter (2, 3) aufrechterhält, um so Schüttgut pneumatisch aus dem ersten Behälter (2) über die ventilgesteuerte Transportleitung (17) zu dem zweiten Behälter (3) zu transportieren und denselben bei Bedarf wieder aufzufüllen, um das Vorhandensein von ausreichend Schüttgut in dem zweiten Behälter (3) zu gewährleisten und einen kontinuierlichen Strom von Schüttgut in die Förderleitung (14) zu erzeugen.

2. Vorrichtung nach Anspruch 1, wobei die Einrichtung zum Regeln des Stroms von Schüttgut in die Förderleitung eine Gefälledurchflußvorrichtung (11) mit einem Steuersystem (12) mit Rückführung ist.

3. Vorrichtung nach Anspruch 1 oder Anspruch 2, in welcher die Einrichtung (11, 12) zum Regeln des Schüttgutstroms in die Förderleitung eine Steuereinrichtung (12) aufweist, die weiter eine Druckabfühleinrichtung hat, so daß der Schüttgutstrom in Abhängigkeit von einem vorbestimmten Druck in der Förderleitung einstellbar ist.

4. Vorrichtung nach irgendeinem vorhergehenden Anspruch, mit einer Einrichtung (5) in dem Fußbereich des ersten Behälters (2) zum Fluidisieren des Schüttguts darin, wobei die Druckgasversorgungseinrichtung (16) mit der Förderleitung (l4) verbunden ist.

5. Vorrichtung nach irgendeinem vorhergehenden Anspruch, mit einer Ausgleichsleitung (10) zwischen der Förderleitung und dem zweiten Behälter (3), um ausgeglichene Drücke darin zu gewährleisten.

6. Vorrichtung nach irgendeinem vorhergehenden Anspruch, mit mehreren Steuerventilen (6, 7, 15, 18), die bewirken, daß Schüttgut aus dem ersten in den zweiten Behälter gefördert wird, wenn die Höhe des Schüttguts in letzterem unter eine vorbestimmte Höhe sinkt.

7. Vorrichtung nach irgendeinem vorhergehenden Anspruch, wobei der erste Behälter (2) mit Schüttgut aus der Schüttgutvorratseinrichtung (1) über das obere Schüttguteinlaßventil (6) gefällegespeist wird.

8. Vorrichtung nach irgendeinem vorhergehenden Anspruch, wobei der erste Behälter (2) eine Höhenabfühleinrichtung (8) aufweist, die die Betätigung des oberen Schüttguteinlaßventils (6) bewirkt, wenn das Schüttgut in dem ersten Behälter (2) unter eine vorbestimmte Höhe sinkt.